Europäisches Patentamt

(19) European Patent Office

Office européen des brevets

(11) Numéro de publication: **0 214 895**
**B1**

(12) **FASCICULE DE BREVET EUROPEEN**

(45) Date de publication du fascicule du brevet: **16.01.91**

(21) Numéro de dépôt: **86401777.7**

(22) Date de dépôt: **08.08.86**

(51) Int. Cl.⁵: **G 21 C 3/12, G 21 C 3/32**

(54) **Assemblage combustible nucléaire à structure de maintien et dispositif anti-envol.**

(30) Priorité: **09.08.85 FR 8512240**

(43) Date de publication de la demande:
**18.03.87 Bulletin 87/12**

(45) Mention de la délivrance du brevet:
**16.01.91 Bulletin 91/03**

(84) Etats contractants désignés:
**BE CH DE GB IT LI NL SE**

(56) Documents cités:
**EP-A-0 147 183**
**DE-B-2 742 946**
**FR-A-1 546 968**
**FR-A-2 240 502**
**US-A-4 078 967**

(73) Titulaire: **FRAMATOME**
**Tour Fiat 1, Place de la Coupole**
**F-92400 Courbevoie (FR)**

(72) Inventeur: **Leclercq, Joseph**
**30, Route de Champagne**
**F-69370 St Didier au Mt d'Or (FR)**
Inventeur: **Canat, Jean-Noel**
**75, rue des Aqueducs**
**F-69005 Lyon (FR)**

(74) Mandataire: **Fort, Jacques et al**
**CABINET PLASSERAUD 84, rue d'Amsterdam**
**F-75009 Paris (FR)**

Courier Press, Leamington Spa, England.

## Description

L'invention concerne les assemblages combustibles pour réacteur nucléaire et elle trouve une application particuliérement importante, bien que non exclusive, dans les réacteurs refroidis et modérés à l'eau légère.

Les assemblages combustibles actuellement utilisés sont généralement du type comprenant un faisceau de crayons de combustible (ce terme désignant les crayons chargés aussi bien en matière fissile qu'en matiére fertile) et une structure de maintien du faisceau comportant des piéces d'extrémité supérieure et inférieure reliées par des tirants (servant fréquemment de tubes guides pour des crayons de commande) portant des grilles de maintien des crayons combustibles aux noeuds d'un réseau régulier, et des moyens élastiques de transmission d'effort à la piéce supérieure, tendant à appliquer l'assemblage sur une plaque support de coeur et à réaliser la fonction dite d'anti-envol.

Un coeur de réacteur nucléaire est couramment constitué de tels assemblages, de section hexagonale ou carrée, portés par une plaque support de coeur. Dans les assemblages utilisés à ce jour, les éléments de la structure sont fixés rigidement les uns aux autres. Les piéces d'extrémité sont munies de trous de passage du réfrigérant et la plaque support de coeur posséde elleméme des ouvertures d'amenée du réfrigérant dans les assemblages. Cette plaque support est également munie de pions de centrage destinés à s'engager dans la piéce, d'extrémité inférieure pour la fixer en position.

Au-dessus des assemblages est placée une plaque supérieure de coeur qui délimite ce dernier et possède également des ouvertures d'évacuation du caloporteur réchauffé dans le coeur. Cette plaque supérieure définit, avec des éléments de guidage des grappes de crayons de commande, les équipements internes supérieurs du réacteur.

La poussée hydraulique du réfrigérant sous pression sur les assemblages en régime normal et/ou en régime transitoire oblige à munir les assemblages d'un dispositif anti-envol destiné à maintenir l'assemblage au contact de la plaque support de coeur. Ces dispositifs utilisent en régle générale des moyens élastiques. La solution la plus employée consiste à utiliser des moyens élastiques formés par des ressorts fixés à la piéce d'extrémité supérieure de l'assemblage, sur laquelle vient s'appuyer la plaque supérieure de coeur pour exercer une force tendant à maintenir les assemblages en appui sur la plaque support de coeur en s'opposant à la poussée hydraulique du réfrigérant. Ces ressorts peuvent prendre des formes trés diverses, par exemple celles décrites dans les documents FR—A—1 536 257, 2 326 010, 2 412 142, et 2 409 576 auxquels on pourra se reporter.

Ces dispositifs de ressort fonctionnent de maniére à peu prés satisfaisante. Ils n'en posent pas moins des problèmes. Leur fabrication est complexe. Leur efficacité diminue au fur et à mesure de l'irradiation. Leur encombrement rétrécit la veine de caloporteur dans la piéce d'extrémité supérieure et augmente les pertes de charge. Enfin, ces ressorts gênent l'introduction, dans la piéce d'extrémité supérieure, du grappin de manutention des assemblages.

Ces problèmes, ou du moins certains d'entre eux, sont d'autant plus graves que les assemblages sont de grande longueur. On sait en effet qu'un problème majeur est créé par les différences d'allongement, sous irradiation et sous température, entre les différents constituants du coeur et des assemblages, formés les uns en alliage à base de zirconium et, d'autres, en acier inoxydable. Sur les assemblages actuels, ayant une longueur de plusieurs mètres, des assemblages adjacents, dont l'un est neuf et un autre a subi une irradiation, peuvent présenter une différence de longueur de plusieurs centimètres. Ces différences de longueur rendent difficile de réaliser des ressorts susceptibles d'appliquer en permanence et en toutes circonstances les assemblages sur la plaque support de coeur, ce qui est nécessaire pour éviter tous les chocs ou décollements et les vibrations excessives des crayons. Par ailleurs, l'augmentation constante de puissance des réacteurs nucléaires se traduit par une augmentation des efforts d'origine hydraulique exercés sur les ressorts, efforts qui deviennent bien supérieurs au poids de l'assemblage, et exigent l'emploi de ressorts de plus en plus volumineux et difficiles à intégrer dans la pièce d'extrémité supérieure.

Le document EP—A—0 147 183 montre un assemblage du type ci-dessus défini dans lequel les moyens élastiques sont interposés entre la pièce d'extrémité supérieure et une plaque anti-envol qui coulisse dans la pièce d'extrémité supérieure et prend appui sur la plaque supérieure de coeur.

L'invention vise à fournir un assemblage de combustible nucléaire du type ci-dessus défini, dans lequel l'absorption de la poussée hydraulique sur les assemblages s'effectue dans de meilleures conditions que par le passé, notamment en ce que les efforts à transmettre par les moyens élastiques sont réduits.

Pour cela, l'invention utilise les résultats d'une analyse de la répartition de la poussée hydraulique appliquée à l'assemblage. Cette analyse montre que la poussée s'exerce en majeure partie sur le faisceau de crayons, les tubes guides et les grilles de maintien. La poussée sur ces éléments représente 80 à 85% des efforts hydrauliques appliqués aux ressorts d'un assemblage classique, le reste des efforts s'exerçant sensiblement par moitié sur les pièces d'extrémité.

L'invention propose en conséquence un assemblage combustible tel que défini par la revendication 1.

La première sous-structure pourra comporter, en plus de la pièce d'extrémité supérieure et d'une fraction des tirants, l'ensemble des grilles de supportage des crayons et ces crayons eux-mèmes. La seconde sous-structure se composera alors du reste des tirants et de la pièce d'extrèmité inférieure, solidarisés de façon permanente.

Grâce à cette disposition, les moyens élastiques n'auront à exercer que la force nécessaire pour assurer l'anti-envol de la seconde sous-structure et la maintenir au contact de la plaque support de coeur.

La venue en butée directe de la pièce d'extrémité supérieure avec la plaque supérieure de coeur présente un avantage supplémentaire: cette butée est beaucoup plus favorable qu'un appui élastique car elle évite l'amplification des vibrations en partie haute de l'assemblage. L'autre sous-structure étant maintenue en appui direct de butée contre la plaque support de coeur par les moyens élastiques, les risques de mises en vibration en partie basse de l'assemblage seront également atténuées.

L'invention sera mieux comprise à la lecture de la description qui suit de divers modes particuliers d'exécution, donnés à titre d'exemples non limitatifs. La description se réfère aux dessins qui l'accompagnent, dans lesquels:

la Figure 1 est un schéma de principe en élévation montrant la structure d'un assemblage suivant un premier mode de réalisation de l'invention;

les Figures 2A et 2B sont des vues en élévation montrant les parties haute et basse d'un assemblage ayant une structure du genre montré en Figure 1;

la Figure 3 est une vue de dessus de la Figure 2A, montrant une fraction de la pièce d'extrémité supérieure et ses liaisons avec les tubes guides de la structure;

les Figures 4, 5 et 6, similaires à la Figure 1, montrent des variantes de réalisation de l'invention;

les Figures 7 et 8 sont des vues de détail montrant le montage d'un crayon de combustible de l'assemblage de la Figure 6 ayant une constitution particulière.

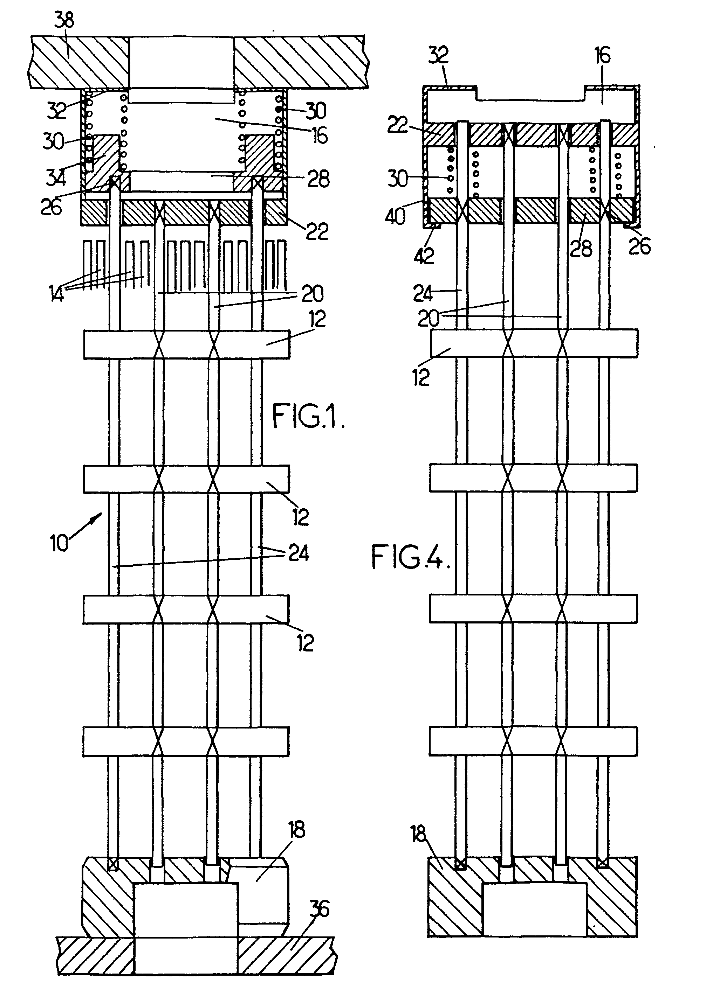

L'assemblage combustible 10 montré schématiquement en Figure 1 comprend une structure support des grilles 12 de supportage et d'entretoisement de crayons combustibles 14 dont seule la partie haute est schématiquement représentée, de deux pièces d'extrémité supérieure 16 et inférieure 18 et des tubes guides assurant le maintien des autres éléments constitutifs de la structure support.

Les tubes guides, constituant des tirants, appartiennent à deux groupes. Les tubes guides 20 du premier groupe sont solidarisés des grilles 12 de façon permanente, comme cela est schématisé par une croix sur la figure. Les tubes guides de ce groupe sont également liés de façon permanente à une plaque 22 percée de trous de sortie du réfrigérant, constituant le fond de la pièce d'extrémité supérieure 16. Les liaisons permanentes peuvent être de tout type approprié, choisi en fonction de la nature du matériau constitutif des pièces a assembler. Il peut notamment s'agir de soudures, de liaisons filetées ou de liaisons par déformation.

Les tubes guides 20 du premier groupe s'engagent dans la pièce d'extrémité inférieure 18 dans laquelle ils peuvent coulisser verticalement.

Les tubes guides 24 du second groupe sont solidarisés de façon permanente de la pièce d'extrémité inférieure 18. Ils traversent des alvéoles des grilles 12 dans lesquels ils peuvent coulisser. Les tubes guides 24 traversent le fond 22 de la pièce d'extrémité supérieure 16 et font saillie à l'intérieur de cette pièce. Leur extrémité supérieure est fixée par une liaison permanente 26, à un organe en forme de plaque ajourée 28 monté dans la partie en forme de cadre de la pièce d'extrèmité supérieure 16, au-dessus du fond 22.

Des ressorts 30, au nombre de quatre dans le mode de réalisation illustré, sont placés entre la plaque 28 et des rebords 32 à la partie supérieure du cadre de la pièce d'extrémitè supérieure 16. Ces ressorts sont pré-comprimés de façon à exercer sur la plaque 28 une force tendant à la maintenir en appui sur le fond 22. La plaque 28 comporte avantageusement des pions 34 destinés à maintenir les ressorts 30 et, éventuellement, à limiter leur compression par venue en butée.

Une première sous-structure, composée du premier groupe de tubes guides 20, des grilles 12 et de la pièce d'extrémité supérieure 16, porte les crayons; elle est soumise pratiquement à 90% environ de la poussée hydraulique reçue par l'assemblage. L'autre sous-structure, comportant les tubes-guides 24, ne participe de ce fait que pour 10% environ à la poussée hydraulique. En conséquence, les ressorts 30 peuvent être dimensionnés pour ne reprendre que 10% de la poussée compléte du réfrigérant sur l'assemblage.

Immédiatement après chargement des assemblages dans le réacteur, la pièce d'extrémité inférieure de chaque assemblage repose sur la plaque support de coeur 36. Les ressorts 30 tendent à refouler la pièce d'extrémité supérieure 16 vers le haut, mais leur force est inférieure au poids de la première sous-structure et des crayons qu'elle porte, de sorte que la première sous structure reste en appui sur la seconde. La plaque supérieure de coeur 38 peut alors être amenée en place. La totalité du poids de l'assemblage va ètre appliquée à la plaque support de coeur, directement pour la seconde sous-structure, par l'intermédiaire de cette seconde sous-structure pour ce qui est de la première.

Lors du démarrage du réacteur, la poussée du réfrigérant soulève la première sous-structure jusqu'à ce que la pièce d'extrémité supérieure 16 soit en contact avec la plaque supérieure du coeur: on voit que 90% environ de la poussée sera directement appliquée sur la plaque 38 sans interposition de moyens élastiques. Du fait de ce contact direct et de la suppression des ressorts que l'on trouvait dans les assemblages antérieurs et qui avaient leur propre fréquence de résonnance, on supprime les amplifications de vibration des équipements internes que peuvent engendrer les moyens élastiques des assemblages classiques sur le faisceau de crayons combustibles 14.

Cette atténuation de la vibration des crayons est un facteur essentiel d'amèlioration de la tenue de la gaine des crayons et de la tenue et de l'efficacité des ressorts prévus dans les grilles et en appui contre les crayons pour maintenir ces derniers.

La fraction de la poussée du réfrigérant qui s'exerce sur la seconde sous-structure tend à soulever la pièce d'extrémité inférieure 18 et à la décoller de la plaque support de coeur 36. Mais, du fait que la fraction de la poussée totale qui s'exerce sur cette seconde sous-structure est faible, il suffit de donner aux ressorts 30 une précompression faible, typiquement entre 100 et 200 daN, pour qu'ils maintiennent la pièce d'extrémité inférieure 18 en contact avec la plaque support de coeur 36. Ce contact direct atténue également les vibrations du faisceau de crayons combustibles.

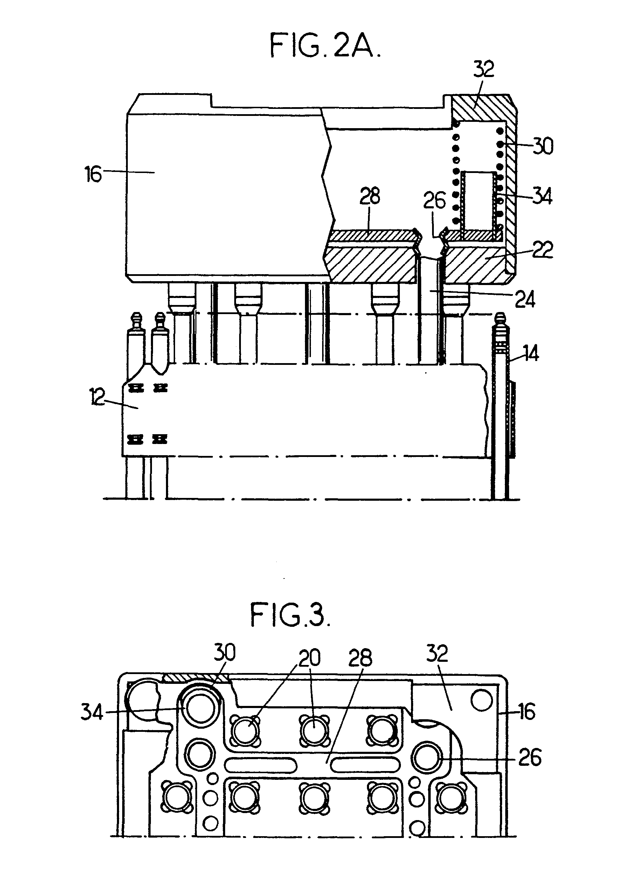

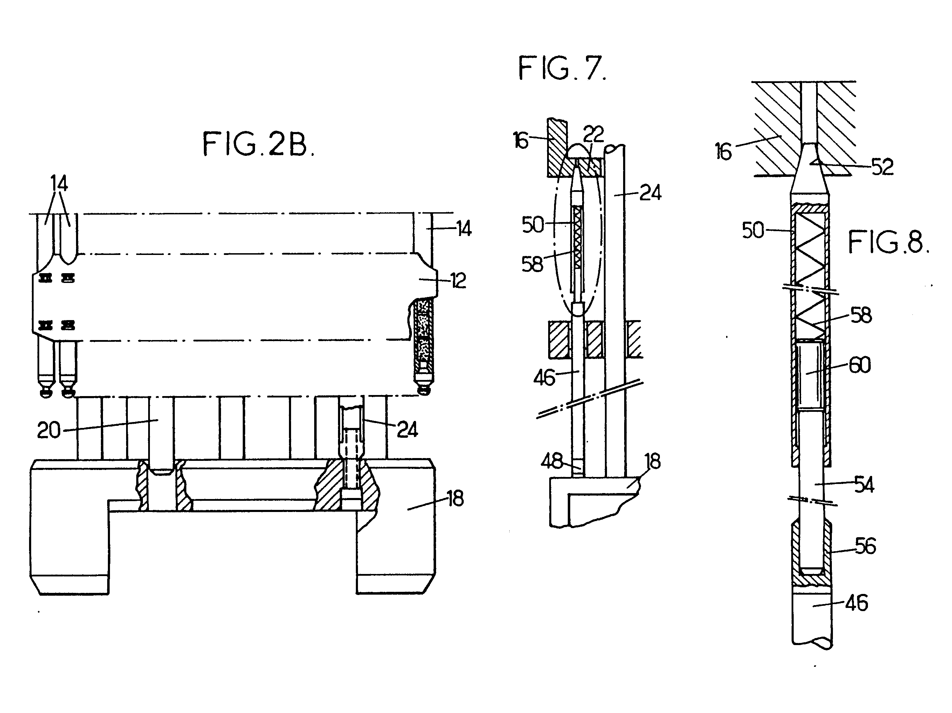

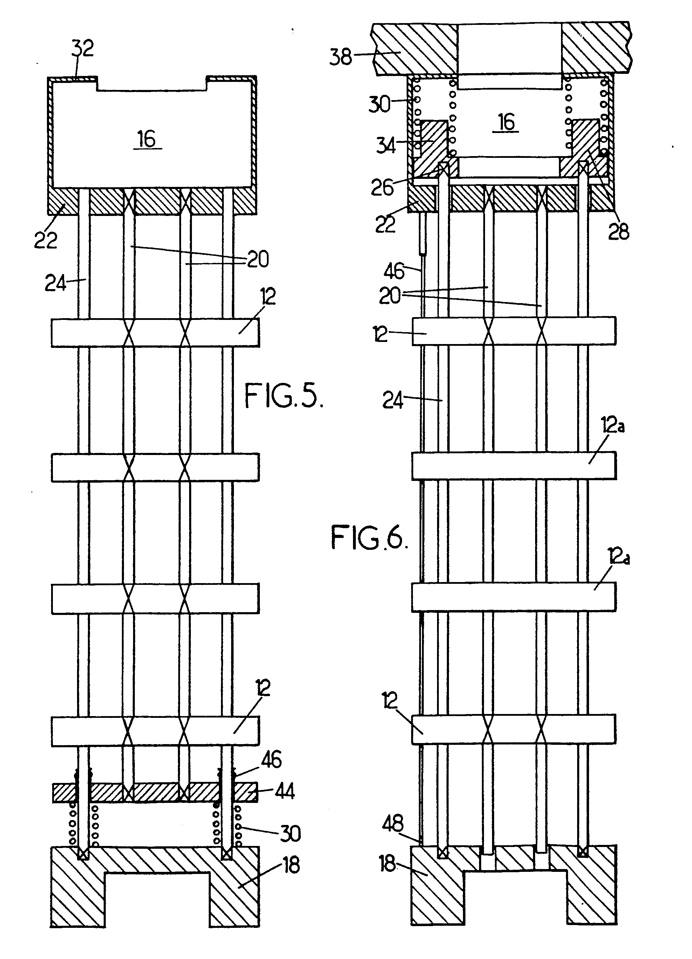

La liaison des tubes guides 20 et 24 avec les pièces d'extrémité apparait en détail sur les Figures 2A, 2B et 3. On voit que les tubes-guides 20 sont sertis à leur extrémité supérieure dans des passages du fond 22 comportant des indentations et coulissent à leur extrémité inférieure dans le pied 18. Par contre, les tubes-guides 24 sont sertis à leur extrémité supérieure dans la plaque 28, coulissent dans le fond 22, et sont fixés à leur extrémité inférieure, par exemple par des vis, sur la pièce d'extrémité 18.

Les vis peuvent comporter une jupe mince déformable dans un alvéole du pied 18 pour assurer leur blocage en rotation. Le coulissement à frottement doux des tubes-guides dans les têtes assure le guidage des deux sous-ensembles l'un par rapport à l'autre et participe à la tenue mécanique de l'assemblage.

La variante de réalisation de l'invention montrée en Figure 4 (où les éléments correspondant à ceux de la Figure 1 sont désignés par le même numéro de référence) comporte une pièce d'extrémité supérieure conçue de façon que les ressorts 30 soient disposés entre deux plaques. Pour cela, la pièce d'extrémité 16 se présente sous forme d'un fond 22, ajouré pour livrer passage au réfrigérant, prolongé vers le haut par un cadre muni de rebords d'accrochage 32 et vers le bas par une jupe 40 munie d'un rebord de butée 42. La partie supérieure des tubes-guides 24 coulisse encore dans le fond 22 tandis que l'extrémité supérieure des tubes guides 20 est fixée à ce fond.

Une plaque ajourée 28 est montée dans la jupe 40 de façon à pouvoir coulisser. Les tubes-guides 24 sont encore fixés à la plaque 2B, mais cette fois la partie de ces tubes-guides qui coulisse dans le fond 22 est placée au delà de la fixation 26. Les tubes-guides 20, de leur côté, coulissent à frottement doux dans la plaque 2B. Les ressorts 30 sont disposés concentriquement aux parties terminales des tubes-guides 24 et tendent à amener les deux sous-structures dans la position de butée où elles sont montrées en Figure 4. Lorsque le réfrigérant en circulation ascendante exerce sur les sous-structures une force dirigée vers le haut, la majeure partie de cet effort est absorbée, comme dans le cas de la Figure 1, par contact direct de la pièce d'extrémité 16 avec la plaque supérieure 38, tandis que le ressort 30 exerce sur la plaque 28 une force suffisante pour maintenir la pièce d'extrémité inférieure 18 en contact avec la plaque support de coeur 36.

Dans la variante de réalisation montrée en Figure 5, où les éléments déjà décrits portent encore le même numéro de référence, les ressorts 30 qui tendent à écarter les pièces d'extrémité l'une de l'autre sont disposés à la partie basse de l'assemblage. La première sous-structure comprend les grilles 12, les tubes-guides 20 fixés au fond 22 de la pièce d'extrémité supérieure 16 et une plaque ajourée ou grille 44 montée de façon à pouvoir coulisser sur les tubes-guides 24. La seconde sous-structure comporte les tubes-guides 24 fixés à la pièce d'extrémité inférieure 18 et coulissent dans la pièce d'extrémité supérieure 16.

Des moyens de butée doivent être prévus pour limiter l'écartement des pièces 16 et 18 sous l'action des ressorts 30 et/ou lors des manutentions de l'assemblage combustible suspendu par la pièce d'extrémité supérieure 16. Dans le mode de réalisation montré en Figure 5, ces moyens de butée sont constitués par des douilles renflées 46 fixées de façon permanente sur les tubes-guides 24 et pouvant venir en contact avec la plaque 44.

Les ressorts 30 sont disposés autour de la portion des tubes-guides 24 située entre la plaque 44 et la pièce d'extrémité inférieure 18.

Le mode de réalisation qui vient d'ètre décrit présente l'intérêt que la pièce d'extrémité supérieure 16 est dépourvue de tout ressort, ce qui facilite le passage des grappes de crayons de commande utilisées pour le pilotage du coeur et facilite la manutention de l'assemblage.

Enfin, l'assemblage montré schématiquement en Figure 6 est du type à grilles flottantes, dans lequel une partie des grilles n'est pas liée aux tubes-guides de la première sous-structure.

La constitution générale de l'assemblage de la Figure 6 est similaire à celle déjà montrée en Figure 1. Mais certaines des grilles 12a sont montées sur les crayons 20 et 24 de façon à pouvoir coulisser. Et surtout certains des crayons de combustible, tel que celui indiqué par 46 sont munis de moyens élastiques s'ajoutant aux ressorts 30 et permettant d'augmenter la force d'écartement des pièces d'extrémité 16 et 18. Le nombre des crayons 46 dépendra de l'effort supplémentaire à exercer.

Chacun des crayons 46 prend appui par son bouchon inférieur 48 sur la pièce d'extrémité inférieure 18. A son extrémité supérieure, il porte les moyens élastiques qui seront maintenant décrits (la disposition pouvant étre inversée).

Les moyens élastiques apparaissent particuliérement sur la Figure 8 qui est une représentation à grande échelle de la partie du crayon montrée en traits mixtes sur la Figure 7. Il comporte un poussoir tubulaire 50 dont la partie terminale conique vient s'engager dans un trou 52 du fond de la pièce d'extrèmité supérieure 16. Ce poussoir 50 coulisse sur un prolongateur 54 rapporté sur le bouchon terminal 56 du crayon 46. Un ressort 58 est disposé dans le poussoir 50 entre la partie terminale de ce poussoir et une entretoise 60 destinée à le retenir en place avant montage du poussoir sur le prolongateur 54. Ce ressort 58 transmet d'une pièce d'extrémité à l'autre un effort participant à l'anti-envol et complètant l'action des ressorts 30. On peut par exemple prévoir des ressorts 58 ayant chacun une précompression de 1 daN. Si chaque crayon d'un assemblage représentatif, dont les crayons sont répartis aux noeuds d'un réseau carré 17 × 17 est équipé d'un tel moyen élastique, l'effort total correspondant atteint environ 250 daN, c'est-à-dire 25% environ de l'effort exercé par le dispositif anti-envol traditionnel utilisé actuellement. Une telle contribution permet de transmettre une partie des efforts hydrauliques dus non seulement aux faisceaux, mais aussi aux grilles flottantes 12a.

La disposition qui vient d'être décrite est applicable non seulement aux assemblages à grilles flottantes, mais aussi aux assemblages dont toutes les grilles sont fixées à des tubes-guides.

L'invention ne se limite par ailleurs pas aux modes particuliers d'exécution donnés à titre d'exemples et il doit être entendu que la portée du présent brevet s'étend à toute variante restant dans le cadre des équivalences.

## Revendications

1. Assemblage combustible comprenant un faisceau de crayons de combustible et une structure de maintien du faisceau comportant des pièces d'extrémité supérieure (16) et inférieure (18) reliées par des tirants (20) portant des grilles de maintien (12) des crayons combustibles (14) aux noeuds d'un réseau régulier, et des moyens élastiques (30) destinés à prendre appui sur une plaque supérieure (38) de coeur et à exercer un effort tendant à appliquer l'assemblage sur une plaque support de coeur (36), caractérisé en ce que ladite structure comprend deux sous-structures déplaçables verticalement l'une par rapport à l'autre,

l'une des sous-structures comprenant la pièce d'extrémité supérieure (16) destinée à venir en appui de butée directe contre un organe fixe, tel que la plaque supérieure de coeur (38), et une fraction desdits tirants,

tandis que l'autre sous-structure comprend la pièce d'extrémité inférieure (18) et le reste des tirants, l'une des sous-structures incluant un organe (28 ou 44) pouvant coulisser par rapport à la pièce d'extrémité de l'autre sous-structure et placé à proximité de cette dernière, lesdits moyens élastiques (30) étant placés entre l'organe coulissant (28 ou 44) et la pièce d'extrémité de l'autre sous-structure de façon à exercer un effort tendant à écarter l'une de l'autre les pièces d'extrémité de l'assemblage.

2. Assemblage combustible selon la revendication 1, caractérisé en ce que la première sous-structure comporte, en plus de la pièce d'extrémité supérieure et d'une fraction des tirants (20), au moins une partie des grilles de supportage des crayons et les crayons eux-mêmes, la seconde sous-structure se composant alors du reste des tirants (24) et de la pièce d'extrémité inférieure, solidarisés de façon permanente.

3. Assemblage selon la revendication 1, caractérisé en ce que les moyens élastiques sont comprimés entre un rebord supérieur (32) de la pièce d'extrémité supérieure (16) et ledit organe (28), en forme de plaque, placé à l'intérieur de ladite pièce d'extrémité supérieure et relié à la pièce d'extrémité inférieure par les tirants (24) appartenant au même sous-ensemble et traversant le fond (22) de la pièce d'extrémité supérieure.

4. Assemblage selon la revendication 1, caractérisé en ce que les moyens élastiques sont comprimés entre le fond (22) de la pièce d'extrémité supérieure (16) et ledit organe coulissant en forme de plaque, placé au-dessous, lesdits moyens élastiques étant constitués par des ressorts placés autour de prolongements des tirants de ladite autre sous-structure, des moyens de butée étant prévus pour limiter l'écartement de la pièce d'extrémité supérieure et de l'organe coulissant.

5. Assemblage selon l'une quelconque des revendications précédentes, caractérisé en ce que certains au moins des crayons de combustible sont en appui par une extrémité sur l'une des pièces d'extrémité et portent, à l'autre extrémité, un poussoir coulissant (50) repoussé contre l'autre pièce d'extrémité par des moyens élastiques supplémentaires (58).

6. Assemblage combustible selon l'une quelconque des revendications précédentes, caractérisé en ce que lesdits moyens élastiques présentent une pré-compression de 100 à 200 daN.

## Patentansprüche

1. Brennstoffaufbau mit einem Brennstabbündel und einer Haltestruktur für das Bündel mit oberen (16) und unteren (18) Endstücken, die durch Spannstangen (20) verbunden sind, die Haltegitter (12) für die Brennstäbe (14) an gleichmäßigen Gitterpunkten tragen, und mit einer elastischen Einrichtung (30), die sich an einer oberen Platte (38) des Kerns abstützt und den Aufbau auf einer Tragplatte (36) des Kerns beaufschlagt, dadurch gekennzeichnet,

daß die Struktur zwei Unterstrukturen umfaßt, die senkrecht relativ zueinander verschiebbar sind,

wobei eine der Unterstrukturen das obere Endstück (16) umfaßt, das direkt an einem festen Element, wie der oberen Platte (38) des Kerns, als Anschlag anliegt, sowie einen Teil der Spannstangen,

während die andere Unterstruktur das untere Endstück (18) und den Rest der Spannstangen umfaßt, wobei eine der Unterstrukturen ein Element (28 oder 44) aufweist, das relativ zum Endstück der anderen Unterstruktur verschiebbar und nahe zu dieser letzteren angeordnet ist, und wobei die elastische Einrichtung (30) zwischen dem verschiebbaren Element (28 oder 44) und dem Endstück der anderen Unterstruktur so angeordnet ist, daß sie die Endstücke des Aufbaus voneinander weg drückt.

2. Brennstoffaufbau nach Anspruch 1, dadurch gekennzeichnet,

daß die erste Unterstruktur zusätzlich zum oberen Endstück und einem Teil der Spannstangen (20) wenigstens einen Teil der Gitter zum Tragen der Stäbe und die Stäbe selbst umfaßt, wobei die zweite Unterstruktur den Rest der Spannstangen (24) und das untere Endstück umfaßt, die fest miteinander verbunden sind.

3. Aufbau nach Anspruch 1, dadurch gekennzeichnet,

daß die elastische Einrichtung zwischen einem oberen Randabschnitt (32) des oberen Endstücks (16) und dem Element (28) in Form einer Platte eingespannt ist, die im Innern des oberen Endstückes angeordnet und mit dem unteren Endstück durch die Spannstangen (24) verbunden ist, die zu dem gleichen Unteraufbau gehören und den Boden (22) des oberen Endstückes durchqueren.

4. Aufbau nach Anspruch 1, dadurch gekennzeichnet,

daß die elastische Einrichtung zwischen dem Boden (22) des oberen Endstückes (16) und dem verschiebbaren Element in Form einer Platte eingespannt ist, die darunter angeordnet ist, wobei die elastische Einrichtung durch Federn gebildet wird, die um die Verlängerungen der Spannstangen der anderen Unterstruktur angeordnet sind, und wobei Anschlageinrichtungen vorgesehen sind, um das Auseinanderbewegen des oberen Endstückes und des verschiebbaren Elements zu begrenzen.

5. Aufbau nach einem der vorhergehenden Ansprüche, dadurch gekennzeichnet,

daß sich wenigstens einige der Brennstäbe mit einem Ende an einem der Endstücke abstützen und am anderen Ende einen verschiebbaren Stößel (50) aufweisen, der gegen das andere Endstück durch eine zusätzliche elastische Einrichtung (58) zurückschiebbar ist.

6. Brennstoffaufbau nach einem der vorhergehenden Ansprüche, dadurch gekennzeichnet,

daß die elastische Einrichtung eine Vorkompression von 100 bis 200 daN aufweist.

**Claims**

1. Fuel assembly comprising a bundle of fuel rods and a structure for maintaining the bundle having an upper end piece (16) and a lower end piece (18) connected by tie rods (20) carrying grids (12) for maintaining the fuel rods (14) at the nodal points of a regular array, and resilient means (30) for abutting an upper core plate (38) and exerting a force biassing the assembly onto a core support plate (36), characterized in that said structure comprises two sub-structures which are vertically mutually movable,

one of the sub-structures comprising the upper end piece (16) arranged for direct abutting connection with a stationary member, such as the upper core plate (38), and some of said tie-rods,

while the other sub-structure comprises the lower end piece (18) and the other tie-rods, one of the sub-structures including a member (28 or 44) slidable with respect to the end piece of the other sub-structure and located in the vicinity of the latter, said resilient means (30) being located between the sliding member (28 or 44) and the end piece of the other sub-structure for exerting an effort tending to spread apart the end pieces of the assembly.

2. Fuel assembly according to claim 1, characterized in that the first sub-structure comprises in addition to the upper end piece and some of the tierods (20) at least some of the grids for supporting the rods annd said rods, while the second substructure then consists of the other tie-rods (24) and the lower end piece which are securely connected to each other.

3. Assembly according to claim 1, characterized in that the resilient means are compressed between an upper flange (32) of the upper end piece (16) and said member (28), which is plate-shaped located within said upper end piece and connected to the lower end piece by those tierods (24) which belong to the same sub-assembly and projecting through the bottom (22) of the upper end piece.

4. Assembly according to claim 1, characterized in that the resilient means are compressed between the bottom (22) of the upper end piece (16) and said plate-shaped slidable member, which is located thereunder, said resilient means consisting of springs located around extensions of the tie-rods of said other sub-structure, abutting means being arranged for limiting the degree of spacing of the upper end piece and slidable member.

5. Assembly according to any one of the preceding claims, characterized in that at least some of the fuel rods have an end in abutment against one of the end pieces and carry a slidable pushrod (50) at the other end thereof, the push rod being forced against the other end piece by additional resilient means (58).

6. Fuel assembly according to any one of the preceding claims, characterized in that said resilient means have a pre-stress of from 100 to 200 daN.

FIG.1.

FIG.4.

## FIG.2A.

## FIG.3.

FIG. 7.

FIG.2B.

FIG.8.

EP 0 214 895 B1

3

FIG.5.

FIG.6.